**Europäisches Patentamt**

**European Patent Office**

**Office européen des brevets**

(19)

(11) Publication number : **0 426 454 B1**

# EUROPEAN PATENT SPECIFICATION

(12)

(45) Date of publication of patent specification :
**15.06.94 Bulletin 94/24**

(51) Int. Cl.$^5$ : **B24D 18/00**

(21) Application number : **90311929.5**

(22) Date of filing : **31.10.90**

(54) **A method of bonding a composite abrasive compact to a metal containing support.**

(30) Priority : **01.11.89 ZA 898318**

(43) Date of publication of application :
**08.05.91 Bulletin 91/19**

(45) Publication of the grant of the patent :
**15.06.94 Bulletin 94/24**

(84) Designated Contracting States :
**AT BE CH DE FR GB IT LI NL SE**

(56) References cited :
**GB-A- 2 201 425**
**US-A- 2 509 652**

(73) Proprietor : **DE BEERS INDUSTRIAL
DIAMOND DIVISION (PROPRIETARY)
LIMITED
Debid House,
Corner Amethyst Street & Crownwood Road,
Theta
Johannesburg, Transvaal (ZA)**

(72) Inventor : **Steinmetz, Klaus
Niedersachsen Strasse 7
W-4044 Kaarst 2 (DE)**

(74) Representative : **Jones, Alan John et al
CARPMAELS & RANSFORD
43 Bloomsbury Square
London, WC1A 2RA (GB)**

EP 0 426 454 B1

Jouve, 18, rue Saint-Denis, 75001 PARIS

## Description

This invention relates to a method of bonding a composite abrasive compact to a metal-containing substrate.

Composite abrasive compacts are well known in the art and comprise an abrasive compact bonded to a cemented carbide support. The abrasive compact consists essentially of a mass of abrasive particles, generally present in an amount of at least 70 percent by volume, bonded into a hard conglomerate. Compacts are polycrystalline masses and may have some direct particle-to-particle bonding. The abrasive particles of compacts are invariably super hard abrasives such as diamond and cubic boron nitride.

The cemented carbide substrate will generally be cemented tungsten carbide, cemented tantalum carbide or cemented titanium carbide.

Examples of composite abrasive compacts are described, for example, In British Patent Specifications Nos. 1,489,130, 1,456,765 and 2,048,927 and United States Patent Specifications Nos. 3,745,623 and 3,743,489.

Composite abrasive compacts are used in a variety of tools such as drill crowns, mining picks, cutting tools and the like. In some of these applications, the compact is brazed into or onto the working surface of the tool, brazing taking place through the cemented carbide support. In other applications, the composite abrasive compact is first bonded to a cemented carbide pin which is then located in a recess in the working surface of the tool and bonded thereto. Bonding of the composite abrasive compact to the cemented carbide pin may take place through a suitable braze.

British Patent Specification No. 1,359,631 describes the use of electrical resistance welding to bond cemented carbide pieces to the teeth of a saw blade.

## SUMMARY OF THE INVENTION

According to the present invention, there is provided a method of bonding a composite abrasive compact comprising an abrasive compact bonded to a cemented carbide support to a cememted carbide substrate, including the steps of bringing a surface of the cemented carbide support into contact with a surface of the cemented carbide substrate, urging the two surfaces together and passing an electric current through the support, the substrate or both to create heat at the interface of the two surfaces and cause the surfaces to bond together.

## DESCRIPTION OF EMBODIMENTS

Thus, the invention utilises electrical resistance welding techniques to create the heat necessary to produce a bond between a surface of the cemented carbide support of a composite abrasive compact and a surface of the cemented carbide substrate. The use of electrical resistance welding has several advantages over known methods. First, the two surfaces need not be coated. Expensive metal coatings to improve the wetting properties of the cemented carbide surface are thus not necessary. Second, electrical resistance welding involves short heating cycles minimising the dangers of damage to the abrasive compact layer occurring. Third, it is believed that greater bond strengths can be achieved and the bonds will not be adversely affected if subjected to post-bonding brazing or heating operations.

The composite abrasive compact may be any known in the art. The method of the invention has particular application to composite diamond abrasive compacts.

Examples of suitable welding electric currents are:

    Pulsed current
    (condenser discharge)
    Alternating current
    (single phase and three phase alternating current)
    Rectified alternating current
    (single phase and three phase rectifiers)
    High frequency current (e.g. 1000 cycles)
    Regulated direct current of transistor-rectifier current sources with
- constant current control
- constant voltage control
- constant power control

Examples of welding parameters are:

| Bonded area | Current time | Effective current |
|---|---|---|
| approx. 2 mm² | 0,1 to 0,2 second | 300 to 700 A |
| approx. 10 mm² | 0,2 to 1,0 second | 500 to 2000 A |

The electrical current may be supplied by metallic electrodes or low-melting alloys. Transistor control direct current sources and high frequency current sources may be used.

In order to ensure that there is good contact between the surfaces, they are urged together. Typical loads which are applied to urge the surfaces together are in the range 100 to 300N. The surfaces may be cleaned or ground or even metal-coated prior to bonding.

The surfaces which are joined may form a butt-joint, a single projection or annular projection joint (closed surface) or a multi-projection joint (interrupted joint surfaces).

It is generally desirable to provide cooling for the surfaces being bonded and also for the abrasive compact layer. Cooling may be achieved using methods known in the art including cooling gases, liquids or metal cooling elements in contact with one or both of the two components being bonded.

Some stresses may be built up in the bonded components, at least in the interfacial region, during the electrical resistance welding. These stresses, when they occur, may be relieved by subjecting the bonded product to a post-bonding annealing heat treatment. This heat treatment may take the form of a post-welding impulse or a post-welding furnace annealing, e.g. at 300°C for about 3 minutes.

## Claims

1. A method of bonding a composite abrasive compact comprising an abrasive compact bonded to a cemented carbide support to a cemented carbide substrate, including the steps of bringing a surface of the cemented carbide support into contact with a surface of the cemented carbide substrate, urging the two surfaces together and passing an electric current through the support, the substrate or both to create heat at the interface of the two surfaces and cause the surfaces to bond together.

2. A method according to claim 1 wherein the area being bonded is approximately 2mm², the electric current is 300 to 700A and the current is maintained for a period of 0,1 to 0,2 seconds.

3. A method according to claim 1 wherein the area being bonded is approximately 10mm², the electric current is 500 to 2000A and the period during which the current is maintained is 0,2 to 1 second.

4. A method according to any one of the preceding claims wherein a load in the range 100 to 300N is applied to the surfaces to urge them together.

5. A method according to any one of the preceding claims wherein the bonded product is subjected to an annealing heat treatment to relieve any stresses at the interface of the two bonded surfaces.

## Patentansprüche

1. Verfahren zum Binden eines Schleifmittel-Verbundcompacts umfassend ein Schleifmittelcompact, das an einen Sintercarbidträger gebunden ist, an ein Sintercarbid-Substrat, umfassend die Stufen des In-Kontakt-Bringens einer Oberfläche des Sintercarbidträgers mit einer Oberfläche des Sintercarbid-Substrats, das Zusammendrücken der zwei Oberflächen und das Hindurchführen eines elektrischen Stroms durch den Träger, das Substrat oder beide, um Wärme an der Grenzfläche der zwei Oberflächen zu erzeugen und um die Oberflächen zu veranlassen, sich miteinander zu verbinden.

2. Verfahren nach Anspruch 1, worin die zu bindende Oberfläche etwa 2 mm² beträgt, der elektische Strom 300 bis 700 A beträgt und der Strom während einer Zeitdauer von 0,1 bis 0,2 Sekunden beibehalten wird.

3. Verfahren nach Anspruch 1, worin die zu bindende Oberfläche etwa 10 mm² beträgt, der elektische Strom 500 bis 2000 A beträgt und der Strom während einer Zeitdauer von 0,2 bis 0,1 Sekunden beibehalten wird.

4. Verfahren nach irgendeinem der vorhergehenden Ansprüche, worin eine Last im Bereich von 100 bis 300 N auf die Oberflächen angewendet wird, um sie zusammenzudrücken.

5. Verfahren nach irgendeinem der vorhergehenden Ansprüche, worin das gebundene Produkt einer Temper-Wärmebehandlung unterworfen wird, um irgendeine Spannung an der Grenzfläche der zwei verbundenen Oberflächen zu beseitigen.

## Revendications

1. Procédé pour lier un comprimé ou corps compact abrasif composite comprenant un corps compact abrasif lié sur un support au carbure cémenté sur un substrat au carbure cémenté, y compris les étapes consistant à mettre en contact une surface du support au carbure cémenté avec une surface du substrat au carbure cémenté, à forcer l'assemblage des deux surfaces entre elles et à faire passer un courant électrique à travers le support, le substrat ou les deux pour créer de la chaleur à l'interface de deux surfaces et entraîner la liaison des surfaces ensemble.

2. Procédé selon la revendication 1, dans lequel la surface à lier est d'environ 2 mm$^2$, le courant électrique est de 300 à 700 A et le courant est maintenu pendant une période de 0,1 à 0,2 seconde.

3. Procédé selon la revendication 1, dans lequel la surface à lier est d'environ 10 mm$^2$, le courant électrique est de 500 à 2000 A et la période pendant laquelle le courant est maintenu est de 0,2 à 1 seconde.

4. Procédé selon l'une quelconque des revendications précédentes, dans lequel une charge dans la plage de 100 à 300 N est appliquée aux surfaces pour les contraindre à s'assembler.

5. Procédé selon l'une quelconque des revendications précédentes, dans lequel le produit lié est soumis à un traitement thermique de recuit pour libérer toute contrainte à l'interface des deux surfaces liées.